# EUROPÄISCHE PATENTSCHRIFT

(11) **EP 3 594 406 B1**
(45) Veröffentlichungstag und Bekanntmachung des Hinweises auf die Patenterteilung: **23.02.2022**
(21) Anmeldenummer: 19186255.6
(22) Anmeldetag: 15.07.2019
(51) Int. Cl.: D21H 27/10, D21H 11/04, B65D 65/38, B65D 30/00

(54) **KOMPOSTIERBARE UND UMWELTSCHONENDE VERPACKUNG FÜR EIN TIEFKÜHLPRODUKT**
COMPOSTABLE AND ENVIRONMENTALLY FRIENDLY PACKAGING FOR A FROZEN PRODUCT
EMBALLAGE COMPOSTABLE ET RESPECTUEUX DE L'ENVIRONNEMENT POUR UN PRODUIT SURGELÉ

(30) Priorität: 13.07.2018 DE 202018104061 U; 13.03.2019 DE 202019101435 U
(43) Veröffentlichungstag der Anmeldung: 15.01.2020
(73) Patentinhaber: FRoSTA Aktiengesellschaft, 27572 Bremerhaven (DE)
(72) Erfinder: BUSCHMANN, Urban, 31535 Neustadt (DE)
(74) Vertreter: Raffay & Fleck

(56) Entgegenhaltungen:
- WO-A1-2016/182492
- WO-A2-2017/083738

## Beschreibung

Die vorliegende Erfindung behandelt eine Verpackung insbesondere für Tiefkühlkost, die insbesondere aus nachwachsenden Quellen stammt, wo insbesondere keine Konkurrenz zur Nahrungsmittelerzeugung besteht. Das Material kann nach dem Benutzen auf einfache Weise und ohne großen Aufwand sortenrein in der Kreislaufwirtschaft (Recycling) verwertet werden und erlaubt auch andere Wege der Entsorgung, zum Beispiel durch eine Kompostierung, ohne negative Folgen für die Umwelt. Diese positiven Eigenschaften der gewählten Verpackung können optisch durch braune Töne einer ungebleichten Papier- und/oder Kartonverpackung unterstützt werden, die wahlweise bedruckt werden kann, insbesondere aber nur partiell bedruckt ist oder wird.

Eine Verpackung für Tiefkühlkost unterliegt besonderen Anforderungen in Bezug auf die Einwirkung von Feuchtigkeit und der langen Lagerungsdauer. Die Tiefkühllogistik ist eine "feuchte" Logistik, da sich durch Temperaturschwankungen Wasserdampf an der Verpackungsoberfläche niederschlägt. Eine saugfähige Oberfläche nimmt das Wasser auf und kann die mechanischen Eigenschaften der Verpackung nachteilig verändern.

Aus diesem Grund ist es Stand der Technik, dass im Bereich der Tiefkühlprodukte zwar Kartonagen verwendet werden, praktisch aber keine flexiblen Verpackungen aus Papier zum Einsatz kommen. Es ist aber bekannt, dass Papierverpackungen mit Folie aus fossilen Quellen oder Biofolie kaschiert verwendet werden. Nachteilig dabei ist, dass diese nicht als reine Papierfraktion recycelt werden können, insbesondere weil die 5% Grenze für die Minderkomponente bei flexiblen Materialien in der Regel nicht eingehalten wird. Es ist auch bekannt, dass ein Papiermaterial in der Verarbeitung in Schlauchbeutelmaschinen eingesetzt wird, wobei die für eine solche Verarbeitung notwendigen elastischen Eigenschaften des Papiers im Vorfeld in einem speziellen Verfahren durch Schaffung einer Miniwelle in der Mikrostruktur des Materials erreicht werden, wie beispielsweise in der EP 1 985 437 B1 beschrieben. Allerdings findet ein solches Verfahren bzw. eine solche Verpackung bisher Einsatz nur in Trockenprodukten. Im Bereich der festen Kartonmaterialien werden Verpackungen eingesetzt, die trotz Kunststoffauftrags, als Papier recycelt werden können, da sie auf Grund der hohen Dicke des Kartonmaterials die 5% Grenze in der Regel einhalten können. Nachteilig ist aber, dass die marktüblichen Materialien mit sogenannten Hartleimen versehen sind und dadurch nicht kompostierbar sind. Es werden auch feste kartonbasierte Materialien aus Recyclingmaterial angeboten, die jedoch wegen der Belastung mit Mineralöl als Verpackung für Lebensmittel nachteilig sind.

Auf dem Markt sind zahlreiche Verpackungsmaterialien zu finden, die aus Kunststoff oder gebleichtem Papier/Karton bestehen und papierähnlich bedruckt werden. Auch die Haptik wird hierbei zum Teil durch besondere Lacke sehr papierähnlich gestaltet. Hierbei wird angestrebt dem Verbraucher von ihm erwartete Natürlichkeit in "Papier-Aussehen und -gefühl beim Anfassen" zu präsentieren, ohne jedoch nachhaltig zu sein.

Als Verpackung in der Tiefkühlindustrie werden sehr häufig Kunststoffmaterialien aus PET, PE oder PP oder Kombinationen dieser Stoffe eingesetzt, wobei sich dabei viele Vorteile ergeben. Sie stellen ein dichtes Material dar, wodurch halbflüssige und auch ölige Komponenten durch die Verpackung nicht durchdringen. Kunststoffe besitzen elastische Eigenschaften, wodurch sie sich sehr gut über Schlauchbeutelmaschinen verarbeiten lassen. Dabei ist insbesondere das Umbiegen um sehr kleine Radien bei kalter und dadurch feuchter Umgebung, ohne zu reißen, an den sogenannten Schultern der Verpackungsmaschinen von Bedeutung. Ferner sind Kunststoffe sehr resistent gegen Feuchtigkeit. Auf der anderen Seite haben Kunststoffe ganz deutliche Nachteile. Zum einen ist das Erdöl als die Quelle für diese Materialien endlich und sie steht der Menschheit nicht unendlich zur Verfügung. Zum anderen ist die Benutzung von Kunststoff für die Umwelt sehr kritisch. Nur weniger Länder haben ein gut funktionierendes Recyclingsystem, wodurch eine große Menge an Plastik in der Umwelt entsorgt wird. So werden jährlich (2018) ca. 8 Mio. t Plastik in den Ozeanen entsorgt und diese Entwicklung muss dringend gestoppt werden. Kunststoffe verursachen auch relativ hohe Klimaemissionen bei ihrer Herstellung in kg CO2e / kg Material (ecoinvent 3.1 und/oder 3.2), z.B.: verursacht Polyethylen 2,91 kg CO2e/kg Polyethylen, Polypropylen 2,65 kg CO2e/kg Polypropylen, Polyethylenterephthalat 3,52 kg CO2e/kg Polyethylenterephthalat, Polystyren 3,87 kg CO2e/kg Polystyren, Aluminiumfolie 9,89 kg CO2e/kg Aluminiumfolie. Unter Berücksichtigung der dringenden Probleme der Menschheit, wie Vermüllung der Ozeane, überwiegen beim Einsatz von Kunststoffen die Nachteile die erfinderisch behoben werden.

Der Erfindung liegt die Aufgabe zugrunde die Nachteile der Nutzung der Kunststoffe und der anderen erwähnten Materialien möglichst umfassend durch ein Verpackungsmaterial aus nachwachsenden Quellen zu ersetzen und insbesondere dennoch übliche Verpackungsmaschinen und/oder Rezepturen verwenden zu können. Wie aus der WO 2017/083738 A2 bereits bekannt, können Verpackungen für Tiefkühlprodukte aus Kraftpapier und einer Isolationsschicht auf Basis von Naturfasern, namentlich Bastfasern, gebildet werden. Weiterhin sind in der WO 2016/182492 A1 Transportvorrichtungen für Tiefkühlprodukte gebildet aus Kraftpapier und einer Membran auf Basis von biologisch abbaubarem Plastik beschrieben.

Die Aufgabe wird insbesondere durch den Einsatz von ungebleichtem Kraftpapier bzw. Karton gelöst. Prinzipiell sind die Klimaemissionen für Papier um mindestens die Hälfte niedriger als für Kunststoffe. Durch die Vermeidung des Bleichungsprozesses können die Klimaemissionen des Papiers und Kartons darüber hinaus weiter deutlich gesenkt werden (nach ecoinvent 3.1 und/oder 3.2):
- Papier ungebleicht: 0,82 kg CO2e/kg (gebleichtes Papier: 1,38 kg CO2e/kg)
- Karton ungebleicht 0,93 kg CO2e/kg (gebleichter Karton: 1,1 kg CO2e/kg)

Der bevorzugte Einsatz von ungebleichtem Papier oder Karton geht mit einer Erfüllung der Verbrauchererwartung an Natürlichkeit in Aussehen und Haptik einher. Mit Hilfe eines Spektrophotometers (x-rite eXact) wurde das Farbspektrum der Oberfläche ungebleichter Kartons und Papiere gemessen und wurden folgende Werte ermittelt:
- Papiere 50 bis 70 g/m²: L = 63,9; a = 10,0; b = 22,4; delta E nach CIEDE2000 = 1,9
- Karton 244 bis 356 g/m²: L = 60,4; a = 8,9; b = 19,7; delta E nach CIEDE2000 = 1,5

Bevorzugt werden Oberflächen mit L zwischen 30 und 60 und/oder a zwischen 0 und 25 und/oder b zwischen 5 und 127 und/oder delta E CIEDE2000 zwischen 1 und 3, gemessen insbesondere mit einem Spektrophotometer x-rite eXact.

In Bezug auf die mechanischen Eigenschaften und die Beeinträchtigung mit Feuchtigkeit in der Tiefkühllogistik wurde bei Kraftpapieren und Kraftkartons überraschenderweise eine Zunahme der Durchstoßfestigkeit bei Anfeuchtung festgestellt. In Laboruntersuchungen wurde einerseits ein Kraftpapier bei 23°C und einer relativen Feuchtigkeit (rF) von 50% ("trocken") und andererseits bei 23°C und 80% rF ("feucht") gelagert und in einer Druck/Zug Prüfmaschine flach gespannt und mit einem Kegel (Winkel 45°) behandelt. Dabei wurde ein Kraft-Zeit-Diagramm aufgenommen und der Punkt gemessen, bei der ein Durchstoßen des Kegels durch das Material erfolgt ist. Prüfbedingungen: Zwick-Strucktograph (Zwick Roell 616451), Probenbreite: 60 mm, Spannweite zwischen den Stützen: 62 mm, konstante Eindringgeschwindigkeit von 7,5 mm/min, Radius der abgeflachten Kegelspitze: 1,5 mm, Vorkraft 1 N. Gemessen wurde die maximale Kraft bis zum Durchstoßen der Probe bzw. bis zum Erreichen einer maximalen Weges des Prüfkörpers von 6,5 mm.

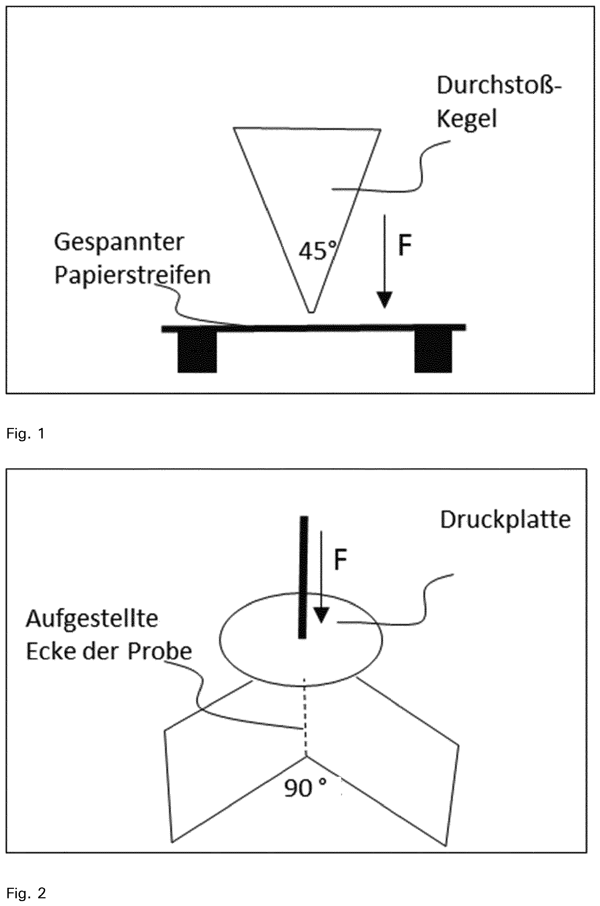

(Probenanordnung während der Messung siehe Fig.1). Die Lagerung der Proben erfolgte zuvor im Gerät "memmert HPP 110" für 3 Stunden bei den oben angegebenen Bedingungen für "trocken" und "feucht". Es ergaben sich folgende Ergebnisse an Durchstoßkraft (bei einer Wiederholungsanzahl von n = 20, statistische Sicherheit der Unterschiedlichkeit der Mittelwerte ermittelt nach t-Test beträgt mindestens 99%):
- Kraftpapier 50 g/m²: trocken 8,3 N, feucht: 10,0 N
- Kraftpapier 70 g/m²: trocken 12,6, feucht: 17,1 N

Die Erhöhung der Durchstoßfestigkeit zeigt eine besondere Eignung des Kraftpapiers für den Einsatz im Tiefkühlbereich, weil die Beeinträchtigung mit Feuchtigkeit in der Logistik sogar von Vorteil ist. Bei den Messungen wurde erfindungsgemäß auch festgestellt, dass die Befeuchtung des Kraftpapiers die Eignung für die Maschinenverarbeitung bei der Abfüllung von tiefgefrorenen Komponenten besonders erhöht, da die Elastizität des befeuchteten Kraftpapiers steigt. Bei den o.g. Messungen am Zwick-Strucktographen wird das Kraft-Weg-Diagramm aufgezeichnet. Aus der Materialprüfung ist es bekannt, dass der Anstiegswinkel der Kurve ein Maß für die Elastizität darstellt. Je steiler bzw. größer der Anstiegswinkel desto spröder oder härter und dadurch auch brüchiger ist das Material. Folgende Anstiegswinkel im Kraft-Weg-Diagramm wurden ein Kraftpapier mit 50 g/m² und erreicht:
- Kraftpapier ungebleicht "trocken": 75°,
- Kraftpapier ungebleicht "feucht": 67°.

Die Zunahme der Elastizität stellt einerseits einen wichtigen Faktor für die Maschinengängigkeit dar und andererseits auch eine Voraussetzung für die mechanische Eignung in der Tiefkühllogistik. Hierbei wird das verpackte Tiefkühlprodukt Druck- und Stoßbeanspruchungen ausgesetzt, insbesondere, weil die tiefgefrorenen Bestandteile bei einer typischen Tiefkühltemperatur von -18°C hart sind und teilweise scharfe Kanten aufweisen. Die erfindungsgemäße Eignung des ungebleichten Kraftpapiers für die Tiefkühllogistik wurde in einem Labortest aufgezeigt. Dabei wurden 49,5 × 31,5 cm Kraftpapierstreifen zu einem Beutel geformt, mit 400 g Bandnudeln (11×60mm) befüllt und wurde der verschlossene Beutel bei -40°C mit Umluft für 60 min temperiert. Anschließend wurden die einzelnen Beutel aus einer Höhe von 1m unmittelbar auf den Boden, einen mit Kunstharz beschichteten Betonboden, fallen gelassen. In der Auswertung wurden Löcher oder Brüche in der Verpackung festgestellt und ausgewertet. Folgende Ergebnisse wurden bei 10 Würfen erreicht:
- Kraftpapier ungebleicht 60 g/m²: 1 mal ein leichter Riss ca 10mm Länge
- Papier aus Pulpe gebleicht 60 g/m²: 6 mal mittlere bis größere Risse (größer als 10 mm, bis 50mm Länge)

Auch im Bereich von Kraftkartons wurde überraschenderweise eine besondere Eignung für Tiefkühlkost festgestellt. Hierbei wurde die sog. "Corner Stability" gemessen, ein Maß mit dem die mechanische Stabilität von auf einer Palette gepackten Kartons berechnet werden kann. Für die Messmethode wurden Kraftkartonproben mit einer Kantenlänge von 8,5 × 3 cm, mit einer Kante mit und einer Kante gegen die Faserrichtung ausgeschnitten und wurde jeweils mittig, bei einem Teil der Proben parallel zur Faserrichtung und ein anderer Teil der Proben quer zur Faserrichtung mittels Warner-Bratzler-Schneide eine Rillung vorgenommen. Dabei wurden die Proben unter die Schneide (Dicke 3mm, Spitzenhöhe 3mm) gelegt und mit einer Vorkraft von 1N und einer Geschwindigkeit von 10 mm/min in die Tischaussparung (Breite 3,6mm) eingedrückt. Dadurch wurde die Kante bzw. Ecke für die Prüfung geformt. Die Proben wurden 3 Stunden bei 80% rF bei 20°C im Klimaschrank (siehe oben) klimatisiert. Anschließend wurden die Probe entlang der Rillung geknickt und wurde dadurch eine Kante gebildet (Kante simuliert die Kraft tragende Kante einer Faltschachtel auf der Palette). Die Proben wurden in einem Struktographen (Zwick-Roell, siehe oben) auf einer dafür vorgefrästen Unterlage positioniert, die zwei rechtwinklig zueinander angeordnete Nuten aufwies, in die der um 90° abgewinkelte Karton eingestellt wurde, um zu stehen wie in Figur 2 gezeigt. Es wurde dann mittels eines runden Stempels mit dem Durchmesser von 36 mm bei einem Vorschub von 10 mm/min eine Kraft auf die Ecke der Probe ausgeübt. In der Untersuchung wurden ein ungebleichter Kraftkarton und ein handelsüblicher hart verleimter (Karton mit Wasser abweisenden Mitteln versetzt), weißer GC Karton mit gleicher Grammatur verglichen. Folgende Ergebnisse wurden bei 80 % rF und 23°C erreicht:
- Ungebleichter Kraftkarton 244 g/m²:
   ∘ Rille mit der Faserlaufrichtung: 36,4 N
   ∘ Rille gegen die Faserlaufrichtung: 46,9 N
- Gebleichter und hart verleimter marktüblicher Vergleichskarton 244 g/m²
   ∘ Rille mit der Faserlaufrichtung: 30 N
   ∘ Rille gegen die Faserlaufrichtung: 35,5 N

Die überraschenderweise festgestellte relative Beständigkeit gegen Feuchtigkeit, verbunden mit der Erhöhung der mechanischen Eigenschaften des Kraftpapiers oder Kraftkartons erlaubt eine erfindungsgemäße direkte Verpackung von tiefgefrorenem Gemüse. Auch andere tiefgefrorene Komponenten können direkt in die Kraftpapiere, Kraftkartons, insbesondere zumindest innen unbeschichtet und/oder insbesondere zumindest innen unbedruckt, verpackt werden, wie Hähnchenfleischstücke, gefrorener Reis oder dergleichen. Diese Machbarkeit wurde darüber hinaus in einem Lagertest entsprechend der Tiefkühllogistik mit folgenden Produkten festgestellt:
- Test 1: Tiefgefrorenes Gemüse (Karotten, Zuckererbsenschoten, Blumenkohl, Pilze, Tomatenwürfe)
- Test 2: Tiefgefrorenes Gemisch, bestehend aus 70% gewolftem Spinat und 30% einer Sahnesoße (Rahmspinat)
- Test 3: Gefrorene Penne beschichtet mit einer Käsesahnesoße (Gefrierpunkt über -10°C).

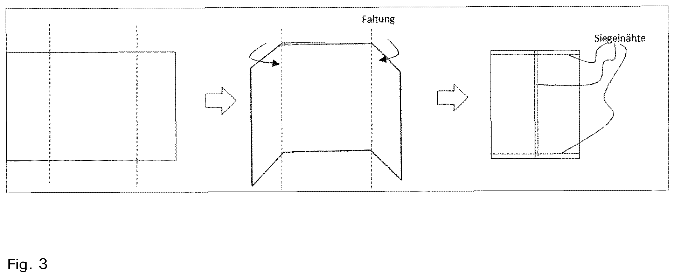

Die Produkte wurden in zu Beuteln gefaltetem Kraftpapier, ohne weitere Beschichtung, wie in Fig. 3 gezeigt, verpackt und mit Klebeband verklebt. Nach einer Tiefkühllagerung entsprechend 12 Monaten wurden keine Feuchtigkeits-Flecken auf der äußeren und inneren braunen Papieroberfläche festgestellt.

Im Fall von ölhaltigen Komponenten oder Produktbestandteilen, die einen tiefen Gefrierpunkt aufweisen, kann das Kraftpapier mit einem mechanisch aufbereiteten Papier laminiert werden. Zur Herstellung dieses mechanisch aufbereiteten Papiers werden Zellulosefasern, insbesondere Frischfasern, zur Papierherstellung gemahlen und, insbesondere unter hohem Druck, mechanisch und mit Wasserdampf verdichtet und durch Walzen geglättet. Durch die Verdichtung, insbesondere bis auf über 900 kg/m, insbesondere über 1000 kg/m³, und/oder bis insbesondere 1300 kg/m³, wird insbesondere eine gute Fett- aber auch eine hohe Wasserbeständigkeit erreicht. Normales Papier weist in der Regel eine Dichte von um 700 kg/m³ auf. Das verdichtete Papier kann auf das Kraftpapier auflaminiert werden und/oder mit diesem verbunden werden. Insbesondere wird eine Auskleidung der Verpackung mit verdichtetem Papier vorgesehen und/oder hergestellt. Eine Verbindung, beispielsweise mit dem Kraftpapier und/oder Kraftkarton, kann, insbesondere beim Laminieren, beispielsweise mittels Klebstoff erfolgen. Sie kann beispielsweise vollflächig oder auch nur punktuell oder linienförmig ausgeführt sein und/oder werden. Dies stellt dann eine Beschichtung dar. Das mechanisch verdichtete Papier ist insbesondere ungebleicht und/oder unbedruckt. Insbesondere ist und/oder wird das verdichtete Papier und/oder werden und/oder sind die Fasern, aus denen das verdichtete Papier gebildet ist, nicht chemisch behandelt und/oder nicht imprägniert. Insbesondere ist und/oder wird das verdichtete Papier und/oder werden und/oder sind die Fasern, aus denen das verdichtete Papier gebildet ist, zur Herstellung des verdichteten Papiers ausschließlich mechanisch behandelt.

Gelöst wird die Aufgabe durch eine Verpackung für ein Tiefkühlprodukt, wobei die Verpackung mindestens eine Lage Kraftpapier und/oder Kraftkarton aufweist, wobei die Verpackung weniger als 10 Gew% CTMP und weniger als 10 Gew% BCTMP beinhaltet und keine Imprägnierung beinhaltet und kompostierbar ist.

Die Verpackung ist dadurch gekennzeichnet, dass sie zumindest abschnittsweise mindestens eine mit der mindestens einen Lage Kraftpapier und/oder Kraftkarton, aufweisend ein Flächengewicht von 30 bis 360 g/m², insbesondere durch Laminieren, verbundene Lage verdichtetes Papier, aufweisend eine Dichte im Bereich von 900 bis 1300 kg/m³, und/oder Zellglas aufweist.

Die Verpackung weist mindestens eine Lage verdichtetes Papier und/oder Zellglas, insbesondere im Innenraum der Verpackung frei liegend, auf, wobei die Verpackung, insbesondere zwischen der mindestens einen Lage aus Kraftpapier und/oder Kraftkarton und der mindestens einen Lage verdichtetes Papier und/oder Zellglas bevorzugt mindestens eine Feuchtigkeit, insbesondere Wasserdampf, absorbierende und/oder abweisende Lage und/oder mindestens eine Feuchtigkeit und/oder Öl abweisende Lage aufweist.

Sofern sowohl eine absorbierende und eine abweisende Lage vorhanden ist und oder die mindestens eine Lage mindestens eine absorbierende und eine abweisende Seite und/oder Schicht aufweist, ist die absorbierende insbesondere zum Inneren der Verpackung hin angeordnet.

Die Verpackung ist aus insbesondere ungebleichtem, Kraftpapier und/oder Kraftkarton und/oder Papier, insbesondere Frischfaserpapier, gebildet und/oder wobei die Verpackung zu mindestens 50 Gew% und/oder in der Hauptkomponente aus, insbesondere ungebleichtem, Kraftpapier und/oder Kraftkarton und/oder Papier, insbesondere Frischfaserpapier, gebildet und/oder weist dabei insbesondere weniger als 5 Gew%, insbesondere kein, CTMP und weniger als 5%, insbesondere kein, BCTMP auf.

Der Anteil von CTMP und BCTMP der Verpackung beträgt dabei zusammen insbesondere weniger als 15 Gew%, insbesondere weniger als 10 Gew%, insbesondere weniger als 5 Gew%.

Die Verpackung weist insbesondere weniger als 10 Gew%, insbesondere weniger als 5 Gew%, insbesondere kein, TMP auf.

Der Anteil von TMP, CTMP und BCTMP der Verpackung beträgt dabei zusammen insbesondere weniger als 15 Gew%, insbesondere weniger als 10 Gew%, insbesondere weniger als 5 Gew%.

Unter kompostierbar wird insbesondere eine Kompostierbarkeit nach der Norm Kompostierung EN 13432 verstanden.

Insbesondere weist die Verpackung keine Folie auf und/oder ist das Kraftpapier und/oder der Kraftkarton und/oder das verdichtete Papier nicht flächig, insbesondere nicht über mehr als 5% dessen flächiger Erstreckung, insbesondere gar nicht, mit einer Folie kaschiert.

Ist die Verpackung ein Tray, insbesondere für eine Mikrowelle- und Backofenzubereitung, sind das verdichtete Papier und die Feuchtigkeit absorbierende Lage insbesondere am Boden des Trays angeordnet, insbesondere sich über den gesamten Boden erstreckend. Insbesondere erstrecken sie sich auch an den Seiten zumindest 1cm vom Boden nach oben.

Durch Vorsehen einer Lage verdichtetes Papier und einer Feuchtigkeit absorbierende Lage, kann das Tray auch zur Zubereitung im Backofen oder in der Mikrowelle einer darin gelagerten Speise eingesetzt werden, ohne dass Einschränkungen bezüglich der Art der Speise zu beachten wären und ohne dass das Tray bei der Zubereitung durchweicht.

Bei einem Beutel ist das verdichtete Papier insbesondere als vollflächige Auskleidung an der Innenfläche des Beutels angeordnet. Zwischen dem verdichteten Papier und dem Kraftkarton oder, bei einem Beutel insbesondere Kraftpapier, kann wahlweise eine Feuchtigkeit absorbierende Schicht vorgesehen sein.

Dabei müssen die Feuchtigkeit absorbierende und/oder abweisende Lage und/oder das Papier keine besondere Dicke aufweisen. Es reicht aus, wenn ein Papier mit einem Flächengewicht von 4 g/m² und eine Menge von 9 g/m² Feuchtigkeit absorbierender Schicht verwendet wird.

Die Feuchtigkeit absorbierende und/oder abweisende Lage kann Teil einer Verklebung oder Laminierung von Kraftkarton und/oder -papier und verdichtetem Papier sein.

Anstelle von verdichtetem Papier kann auch Zellglas und/oder eine Kombination aus Zellglas und verdichtetem Papier verwendet werden. Dieses ist besonders vorteilhaft, wenn Öl haltige oder Komponenten wie Soja-Sauce verwendet werden. Zellglas ist hierbei eine sehr gut abweisende Barriere gegenüber Speiseöl, während das hochverdichtete Papier eine sehr gut abweisende Barriere-Wirkung gegenüber Soja Sauce aufweist. In Untersuchungen wurde jeweils eine mindestens 12-stündige Beständigkeit gegenüber diesen Lebensmitteln festgestellt.

Mit besonderem Vorteil ist die Verpackung eine Faltschachtel, deren unterer Teil abgetrennt werden kann und nach dem Abtrennen ein Tray darstellt. Zur Erleichterung des Abtrennens weist die Verpackung insbesondere mindestens eine Perforationsline und/oder einen Abtrennstreifen auf. Der untere Teil der Verpackung ist dann insbesondere als Tray, insbesondere für Mikrowellen- und Backofenzubereitungen, ausgeführt.

Alternativ kann die Verpackung ein von der Verpackung vollständig umschlossenes erfindungsgemäßes Tray beinhalten, dass nach Öffnen der Verpackung aus der Verpackung mit darin angeordneter Speise entnommen werden kann.

Die Feuchtigkeit absorbierende Lage kann flächig geschlossen oder als punktuelle oder streifenförmig oder abschnittsweise vorhandene Lage ausgebildet sein. Insbesondere beträgt der Abstand zwischen Abschnitten Feuchtigkeit absorbierendes Material aufweisenden Abschnitten, zumindest innerhalb einer Bodenfläche der Verpackung, insbesondere Tray, maximal 2cm, insbesondere maximal 1 cm. Insbesondere erstreckt sich die Feuchtigkeit absorbierende Lage und/oder ist Feuchtigkeit absorbierendes Material mindestens auf 70% zumindest einer Bodenfläche der Verpackung, insbesondere Tray, angeordnet. Die Feuchtigkeit und/oder Öl abweisende und/oder Öl-resistente Lage ist insbesondere flächig geschlossen und/oder abschnittsweise vorhandene Lage ausgebildet sein, insbesondere über mindestens 30%, insbesondere mindestens 80% der Erstreckung der Verpackung und/oder einer Oberfläche der Verpackung.

Feuchtigkeit absorbierende Materialien können insbesondere eins oder mehrere aus der folgenden Liste sein und/oder die Feuchtigkeit absorbierende Lage kann gebildet sein durch eins oder mehrere aus der folgenden Liste:
Kalk, Calciumcarbonat, Calciumhydroxid, Kieselgel, Kieselsäuregel, Metall-organische Gerüste (MOFs, z.B. Zn4O(BDC)3)), Kreide, Kaolin (mit Kaolinit: Al2Si2O5 (OH)4), Alkaliligninsulfonat, Zeolith, Klinoptilolith, Ca-, K- und/oder Na-Klinoptilolith, Polyacrylate, Hydrogel bildende Polymere (z. B. Polyacrylamid, Polyvinylpyrrolidon, Amylopektin, Gelatine, Cellulose, Copolymer der Acrylsäure (z.B. Propensäure, H2C = CH-COOH), Alkalisalze der Arcylsäure, Natriumacrylat (Natriumsalz der Acrylsäure, H2C = CH-COONa), Acrylamid)

Dabei ist/sind der/die Stoff(e) insbesondere gebunden, insbesondere mit mindestens einem Backofen und/oder Mikrowelle resistenten Bindemittel, insbesondere mit einem oder mehreren Acrylaten, gebunden in der Verpackung enthalten und/oder wird die Feuchtigkeit absorbierende Lage gebildet durch einen oder mehreren der Stoffe der obigen Liste gebunden in einem insbesondere mit mindestens einem Backofen und/oder Mikrowelle resistenten Bindemittel, insbesondere mit einem oder mehreren, Acrylaten.

Insbesondere ist dann keine Schicht oder innere Schicht aus (gelösten) Polymeren (als Barriere) erforderlich und vorteilhafterweise auch nicht vorhanden.

Eine Verpackung mit einer Beschichtung und/oder Auskleidung aus verdichtetem Papier ist sogar mikrowellenfähig und/oder backofenfähig. So kann das in der Verpackung, insbesondere tiefgefrorene, Lebensmittel in der Verpackung erhitzt und/oder erwärmt werden. Bei dem verdichteten Papier handelt es sich insbesondere nicht um Kraftpapier und/oder Kraftkarton. Das verdichtete Papier weist insbesondere eine Rauheitzahl und/oder Rauheitzahl SS nach ISO 8791-2 von weniger als 250, insbesondere von weniger als 100 auf, und/oder eine PPS (Rauheit nach Parker Print Surf) von weniger als 4*µ*m, insbesondere weniger als 2*µ*m auf, alle ISO in aktueller Fassung zum Anmeldedatum und/oder insbesondere bei einer relativen Luftfeuchte von 50% und/oder einer Temperatur von 23°C.

Darüber hinaus kann zur Erhöhung der Beständigkeit gegen Fett eine handelsübliche Polyvinylalkohol- und/oder Vinylalkohol-Copolymer- aufgetragen werden/sein.

Vorteilhafterweist beträgt der Anteil an Polyvinylalkohol- und/oder Vinylalkohol-Copolymer zwischen 1 bis 20, insbesondere zwischen 5 bis 15, insbesondere zwischen 7 und 8, g/m².

Insbesondere weist die Verpackung abgesehen von Polyvinylalkohol- und/oder Vinylalkohol-Copolymer und abgesehen von der Feuchtigkeit absorbierende Lage keine Polymere auf. In manchen Anwendungsfällen bevorzugt, insbesondere wenn die Verpackung nicht zur Zubereitung im Backofen oder in der Mikrowelle einer darin gelagerten Speise vorgesehen ist, weist die Verpackung abgesehen von Polyvinylalkohol- und/oder Vinylalkohol-Copolymer insbesondere keine Polymere auf. In manchen Anwendungsfällen bevorzugt, insbesondere wenn die Verpackung nicht zur Aufnahme von Stoffen mit einem Fettgehalt an deren Außenfläche von mehr als 5% an Fetten, die bei minus 18% flüssig sind, vorgesehen ist und/oder solche nicht beinhaltet, weist die Verpackung insbesondere keine Polymere auf.

In Bezug auf das Versiegeln des geformten Kraftpapier Beutels oder Kartons bestehen nach dem Stand der Technik mehrere Möglichkeiten. Zum einen ist Polyvinylalkohol- und/oder Vinylalkohol-Copolymer selber siegelfähig und zum anderen kann ein Siegellack, insbesondere partiell, beispielsweise punkt- oder linienförmig oder abschnittsweise, insbesondere während des Druckprozesses, auf das Kraftpapier und/oder den Kraftkarton und/oder die Beschichtung und/oder das mechanisch verdichtete Papier aufgetragen werden. Ein Beispiel für eine solches Polyvinylalkohol- und/oder Vinylalkohol-Copolymer ist Ethylen vinyl acetat (EVA).

Dabei wird die Beschichtung und/oder das Siegelmedium insbesondere so gewählt, dass die Verpackung einerseits die Anforderungen der nach EU Empfehlungen benannten Hauptkomponenten bei nicht trennbaren Materialien als "Papier" recycelt werden kann und/oder mindestens die Anforderungen der Norm Kompostierung 13432 erfüllt, insbesondere auch unter der Annahme, dass die Beschichtung und/oder das Siegelmedium sich im Recycling nicht auflöst und bei der Betrachtung der Stoffmengen zu berücksichtigen ist. Es wird aber bevorzugt, die die Beschichtung und/oder das Siegelmedium so auszuführen, dass sie sich im Recycling, insbesondere nach Norm Kompostierung 13432, auflöst.

Gelöst wird die Aufgabe insbesondere durch eine Verpackung für ein Tiefkühlprodukt, wobei die Verpackung insbesondere aus Kraftpapier und/oder Kraftkarton und/oder Papier, insbesondere Frischfaser-Papier, gebildet ist und/oder wobei die Verpackung zu mindestens 50 Gew%, insbesondere 80 Gew%, insbesondere min. 85 Gew%, insbesondere min. 90 Gew%, insbesondere min. 95% und/oder in der Hauptkomponente aus Kraftpapier und/oder Kraftkarton und/oder Frischfaser-Papier gebildet ist. Darunter fällt auch das verdichtete Papier. Insbesondere weist die Verpackung bis zu 50% verdichtetes Papier auf.

Insbesondere weist die Verpackung, insbesondere bei Einsatz von Karton, insbesondere mit einer Grammatur von 200g/m^2 oder mehr, insbesondere bis 350g/m^2, weniger als 10 Gew%, insbesondere weniger als 5 Gew%, insbesondere kein, TMP (Thermomechanical Pulp / thermomechanischer Holzstoff) und/oder weniger als 10 Gew%, insbesondere weniger als 5 Gew%, insbesondere kein, CTMP (Chemithermomechanical Pulp / chemo-thermische Holzstofferzeugung) und/oder weniger als 10 Gew%, insbesondere weniger als 5 Gew%, insbesondere kein, BCTMP (Bleached Chemithermomechanical Pulp / gebleichte chemo-thermische Holzstofferzeugung) auf, und/oder keine Imprägnierung auf und/oder ist die Verpackung kompostierbar.

Insbesondere weist die Verpackung weniger als 10 Gew%, insbesondere weniger als 5 Gew%, insbesondere kein, BCTMP und CTMP (BCTMP Anteil und CTMP Anteil zusammen geringer als 10 Gew%, insbesondere weniger als 5 Gew%) auf und/oder weist die Verpackung weniger als 10 Gew%, insbesondere weniger als 5 Gew%, insbesondere kein, TMP und BCTMP und CTMP (BCTMP Anteil und TMP Anteil und CTMP Anteil zusammen geringer als 10 Gew%, insbesondere weniger als 5 Gew %) auf.

Es sind auf Zellulose basierende Verpackungen bekannt, die jedoch zumindest eine Lage CTMP oder BCTMP beinhalten. Überraschenderweise ist es erfindungsgemäß möglich, auf eine solche im Stand der Technik für notwendig erachtete in Bezug auf die Umweltbilanz und/oder Kompostierbarkeit jedoch abträgliche Komponente zu verzichten und dennoch eine auch für Tiefkühlkost geeignete Verpackung zu schaffen, insbesondere bei Einsatz einer Beschichtung und/oder Auskleidung mit verdichtetem Papier.

Gelöst wird die Aufgabe auch durch die Verwendung von Kraftpapier und/oder Kraftkarton, insbesondere mit einer Polyvinylalkohol- und/oder Vinylalkohol-Copolymerbeschichtung und/oder mechanisch verdichtetes Papier, zur Verpackung eines Produktes, insbesondere eines Tiefkühlproduktes, auf mindestens einer industriellen und/oder maschinellen Verschweißungs-, Befüllungs- und/oder Verpackungsmaschine.

Gelöst wird die Aufgabe auch durch ein Verfahren zur Herstellung einer Verpackung und/oder zur Verpackung eines Produktes, insbesondere eines Tiefkühlproduktes, aufweisend die Handlungen
a. Bereitstellen von Kraftpapier und/oder Kraftkarton, insbesondere mit einer Polyvinylalkohol- und/oder Vinylalkohol-Copolymer- und/oder einer Beschichtung aus verdichtetem Papier auf mindestens einer Seite, insbesondere genau einer Seite, des Kraftpapiers und/oder Kraftkartons
b. Aufeinanderlegen mindestens zweier Abschnitte und/oder Stücke des Kraftpapiers und/oder Kraftkartons, insbesondere so, dass die Beschichtungen der Abschnitte und/oder Stücke sich berühren, insbesondere mindestens über eine Linie von mindestens 5cm Länge, insbesondere eine Fläche von 5cm², und Verbinden der Abschnitte und/oder Stücke, insbesondere Verschmelzen der Beschichtungen und/oder von auf der Beschichtung und/oder dem Kraftpapier und/oder -karton aufgetragenem Siegellack der Abschnitte und/oder Stücke, zumindest über eine Linie von 5cm Länge, insbesondere über eine Fläche von mindestens 0,5cm², unter Ausbildung einer Verpackung
   und insbesondere
c. Befüllen der Verpackung, insbesondere mit einem Tiefkühlprodukt, insbesondere tiefgekühlt,
   und insbesondere
d. Aufeinanderlegen mindestens zweier Abschnitte und/oder Stücke des Kraftpapiers und/oder Kraftkartons, insbesondere der Verpackung, insbesondere so, dass die Beschichtungen der Abschnitte und/oder Stücke sich berühren, insbesondere mindestens über eine Linie von mindestens 5cm Länge, insbesondere eine Fläche von 5cm², und Verbinden der Abschnitte und/oder Stücke, insbesondere Verschmelzen der Beschichtungen und/oder auf der Beschichtung und/oder dem Kraftpapier und/oder Kraftkarton aufgetragenem Siegellack der Abschnitte und/oder Stücke, zumindest über eine Linie von 5cm Länge, insbesondere einer Fläche von mindestens 0,5cm² zum Verschließen der Verpackung.

Gelöst wird die Aufgabe auch durch ein verpacktes Tiefkühlprodukt, verpackt in einer erfindungsgemäßen Verpackung.

Im Fall von ölhaltigen Komponenten oder Produktbestandteilen in der Verpackung, die einen tiefen Gefrierpunkt, insbesondere niedriger als minus 15°C aufweisen, kann vorteilhafterweise zumindest auf die nach innen gerichtete Oberfläche des Kraftpapiers und/oder -kartons eine handelsübliche Beschichtung wie z.B. eine Polyvinylalkohol- und/oder Vinylalkohol-Copolymer- und/oder eine Beschichtung aus verdichtetem Papier aufgebracht werden.

In Bezug auf ein Versiegeln zum Zusammenfügen des geformten Kraftpapier- und/oder -kartonbeutels oder -kartons bestehen nach dem Stand der Technik mehrere Möglichkeiten. Zum einen sind Polyvinylalkohol- und/oder Vinylalkohol-Copolymerbeschichtungen selbst siegelfähig und zum anderen kann ein Siegellack, insbesondere partiell, insbesondere während des Druckprozesses, auf das Kraftpapier und/oder den Kraftkarton aufgetragen werden und/oder sein, insbesondere vor einer Formung des Beutels und/oder Kartons, und zum Versiegeln, Verbinden und/oder Verschweißen, insbesondere zweier Lagen und/oder Abschnitte von Kraftpapier und/oder Kraftkarton miteinander verwendet werden.

Dabei wird die Beschichtung und/oder das Siegelmedium insbesondere so gewählt, dass die Verpackung einerseits als "Papier" recycelt werden kann und andererseits mindestens die Anforderungen der Kompostierungsnorm 13432 erreicht.

Vorteilhafterweise ist und/oder wird das Kraftpapier und/oder der Kraftkarton auf mindestens einer, insbesondere genau einer, Seite mit einer Beschichtung aus, insbesondere lediglich aus und/oder zu 100% aus, Polyvinylalkohol und/oder Vinylalkohol-Copolymer versehen und/oder ist zumindest auf einer, insbesondere auf genau einer, Seite mit einer Beschichtung aus verdichtetem Papier versehen.

Vorteilhafterweise macht die Hauptkomponente mindestens 50 Gew%, insbesondere mindestens 80 Gew%, insbesondere min. 85 Gew%, insbesondere min. 90 Gew%, insbesondere min. 95 Gew% der Verpackung aus und/oder ist sie eine Hauptkomponente nach 94/62/EG und/oder 97/129/EG. Wird eine Beschichtung aus verdichtetem Papier eingesetzt, ist es ausreichend, wenn Kraftkarton und/oder Kraftpapier zusammen mit dem verdichteten Papier mindestens 50 Gew%, insbesondere mindestens 80 Gew%, insbesondere min. 85 Gew%, insbesondere min. 90 Gew%, insbesondere min. 95 Gew% der Verpackung ausmachen und/oder die Hauptkomponente nach 94/62/EG und/oder 97/129/EG darstellen.

Insbesondere ist die Verpackung so ausgebildet, dass sie zum einen erste Materialien beinhaltet, die im Papierrecycling ab- und/oder aufgelöst werden und zum anderen zweite Materialien beinhaltet, wobei die zweiten Materialien mindestens zu 99 Gew%, insbesondere nur, Papier, Karton und/oder verdichtetes Papier beinhalten und wobei neben den ersten und zweiten Materialien insbesondere keine weiteren Materialien beinhaltet sind.

Vorteilhafterweise weist das Kraftpapier und/oder der Kraftkarton keine Mikrostrukturierung auf und/oder wird und/oder wurde das Kraftpapier und/oder der Kraftkarton nicht mikrostrukturiert, insbesondere nicht, wie in der EP 1 985 437 B1 beschrieben.

Insbesondere ist das Kraftpapier und/oder der Kraftkarton und/oder seine Oberflächen und/oder zumindest eine Oberfläche oder in der Struktur nicht gewellt und/oder weist es und/oder sie keine Welligkeit auf. Insbesondere beinhaltet die Verpackung keinen Wellkarton und/oder kein Wellpapier.

Insbesondere weist das Kraftpapier und/oder der Kraftkarton und/oder das Papier und/oder das verdichtete Papier und/oder seine Oberflächen eine zum Bedrucken geeignete Glätte auf.

Vorteilhafterweise ist das Kraftpapier und/oder der Kraftkarton, insbesondere bei einer Lagerung von mindestens drei Stunden bei einer relativen Luftfeuchtigkeit von 50% oder weniger, nicht bi-elastisch, insbesondere nicht elastisch, insbesondere nicht mehr als 4%, insbesondere nicht mehr als 3%, insbesondere nicht mehr als 2%, in Längs- und/oder Querrichtung elastisch.

Vorteilhafterweise weist das Kraftpapier und/oder der Kraftkarton ein Flächengewicht von 50 bis 80 g/m² bei, insbesondere flexiblen, Papieren und/oder 230 bis 300 g/m² bei, insbesondere festen, Kartons, und/oder eine Dichte von 650 bis 800 kg/m³ auf.

Mit besonderem Vorteil ist das Kraftpapier und/oder der Kraftkarton aus Nadelhölzern, insbesondere langfasrigen Nadelhölzern, insbesondere aus Fichte und/oder Kiefer gebildet oder beinhaltet diese zumindest zu 50%.

Mit besonderem Vorteil ist das Kraftpapier und/oder der Kraftkarton zumindest zu 90 Gew%, insbesondere vollständig, aus Fasern gebildet, die einer Fibrillation unterzogen wurden.

Mit besonderem Vorteil ist mindestens 90%, insbesondere das gesamte Kraftpapier und/oder Kraftkarton und/oder Papier mittels Sulfatverfahren oder Kraft-Aufschluss hergestellt, insbesondere mittels Erhitzung von Hackschnitzeln oder zerkleinerten Pflanzenstängeln in Druckkesseln drei bis sechs Stunden lang bei erhöhtem Druck (7 bis 10 bar) mit Natronlauge, Natriumsulfid und/oder Natriumsulfat, insbesondere unter anschließender Filtrierung.

Mit besonderem Vorteil beinhaltet das Kraftpapier und/oder der Kraftkarton kein recyceltes Altpapier oder maximal 10% recyceltes Altpapier und/oder maximal 10% recycelte Fasern und/oder maximal 10% recyceltes Material.

Vorteilhafterweise weist das Kraftpapier eine Klimabilanz, insbesondere nach ecoinvent RER, von höchstens 1 CO2e/kg ungebleichtem Kraftpapier, insbesondere von höchstens 0,85 kg CO2e/kg ungebleichtem Kraftpapier, und/oder der Kraftkarton eine Klimabilanz, insbesondere nach ecoinvent RER, von höchstens 1,05 kg CO2e/kg ungebleichtem Kraftkarton, insbesondere von höchstens 0,95 kg CO2e/kg ungebleichtem Kraftkarton auf.

Neben der besseren Umweltbilanz bringt der Verzicht auf den Bleichvorgang auch Vorteile in der Stabilität mit sich.

Vorteilhafterweise weist das Kraftpapier und/oder der Kraftkarton eine besondere Eignung als Verpackung für Tiefkühlkost auf. Vorteilhafterweise zeigt das Kraftpapier und/oder der Kraftkarton bei einer 3-stündigen Befeuchtung von 80% relativer Feuchtigkeit, beispielsweise bei 23°C, eine Zunahme der Kegel-Durchstoßfestigkeit gemessen in Newton um 20% bei einem Papier von 50 g/m² und von 35% bei einem Papier von 75 g/m² gegenüber Standardbedingungen und/oder 50% relativer Feuchtigkeit und insbesondere 23°C.

Vorteilhafterweise zeigt das Kraftpapier und/oder der Kraftkarton ausgehend von einer dreistündigen Lagerung bei 50% relativer Feuchtigkeit, insbesondere bei 23°C, nach einer dreistündigen Lagerung bei 80% relativer Feuchtigkeit, insbesondere bei 23°C, eine Zunahme der Kegel-Durchstoßfestigkeit von mindesten 15%, insbesondere bei einer Grammatur von mehr als 70g/m² von mindestens 30%.

Vorteilhafterweise ist und/oder wird die Verpackung mindestens zu fünf Raumrichtungen hin verschlossen, insbesondere durch das Kraftpapier und/oder den Kraftkarton.

Vorteilhafterweise umschließt die Verpackung, insbesondere das Kraftpapier und/oder Kraftkarton, ein in der Verpackung befindliches Volumen an allen Seiten.

Vorteilhafterweise weist die Verpackung mindestens eine Verbindung mindestens zweier Abschnitte und/oder Stücke von Kraftpapier und/oder Kraftkarton auf und/oder wird eine solche geschaffen, wobei die Verbindung mittels auf Abschnitten und/oder Stücken befindlicher Beschichtung und/oder Siegellack, insbesondere durch deren Verschmelzung, bewirkt ist und/oder wird.

Vorteilhafterweise wird und/oder ist die Beschichtung und/oder der Siegellack auf der zum Inneren der Verpackung orientierten Seite des Kraftpapiers und/oder Kraftkartons aufgebracht.

Vorteilhafterweise ist und/oder wird ein in der Verpackung befindliches Volumen, insbesondere befindliches Material, insbesondere aufweisend mindestens einen öligen Bestandteil und/oder einen Bestandteil auf, der an seiner Außenfläche einen Fettgehalt von mehr als 5% an Fetten, die bei minus 18% flüssig sind, auf, vollständig durch Kraftpapier und/oder Kraftkarton mit Beschichtung umschlossen, wobei insbesondere alle zum Volumen orientierten Seiten und/oder Flächen des Kraftpapiers und/oder Kraftkartons mit der Beschichtung versehen sind und/oder werden, insbesondere vollständig und/oder flächig. Insbesondere weist dieser Bestandteil einen Gewichtsanteil des in der Verpackung befindliches Volumen, insbesondere befindliches Material, von mindestens 5%, insbesondere mindestens 10% auf.

Vorteilhafterweise ist das Kraftpapier und/oder Kraftkarton, das Kraftpapier und/oder Kraftkarton mit Beschichtung und/oder die Verpackung kompostierbar und/oder biologisch abbaubar, insbesondere nach EN 13432 und/oder EN 14995 und/oder OECD 301 und/oder OECD 302, insbesondere innerhalb von 12 Wochen in einer Industriekompostierung nach Europäischer Norm EN 13432 zu mindestens 90 %.

Vorteilhafterweise besteht die Verpackung überwiegend und/oder ausschließlich aus ungebleichtem Kraftpapier und/oder Kraftkarton und/oder Kraftpapier und/oder Kraftkarton, insbesondere in brauner Farbe.

Vorteilhafterweise besteht die Verpackung zu überwiegend und/oder ausschließlich aus Frischfaserpapier, insbesondere in brauner Farbe.

Vorteilhafterweise ist und/oder wird die Verpackung verschlossen und ist und/oder wird in der Verpackung mindestens ein Tiefkühlprodukt angeordnet.

Vorteilhafterweise ist die Verpackung ein Beutel und/oder eine Faltschachtel.

Vorteilhafterweise weist die Verpackung mindestens eine, insbesondere mindestens zwei und/oder drei, linienförmige Verbindung(en) zweier Stücke und/oder Abschnitte von beschichtetem Kraftpapier und/oder Kraftkarton auf und/oder werden mindestens zwei und/oder drei, linienförmige Verbindungen zweier Stücke und/oder Abschnitte von beschichtetem Kraftpapier und/oder Kraftkarton geschaffen, wobei die Beschichtungen aus einer Polyvinylalkohol- und/oder Vinylalkohol-Copolymer- und/oder Siegellackbeschichtung bestehen und wobei die Verbindung durch Aufeinanderlegen von Beschichtungen zweier Stücke und/oder Abschnitte von beschichtetem Kraftpapier und/oder Kraftkarton und Verschmelzen der Beschichtungen und/oder durch eine Verschmelzung aneinander angrenzender Beschichtungen zweier Stücke und/oder Abschnitte von beschichtetem Kraftpapier und/oder Kraftkarton gebildet ist und/oder wird.

Vorteilhafterweise ist und/oder wird die Verpackung und das mindestens eine Tiefkühlprodukt tiefgekühlt.

Insbesondere weist das Kraftpapier und/oder der Kraftkarton und/oder das Papier ein Flächengewicht von 30 bis 150 g/m² und/oder eine Dichte von 650 bis 800 kg/m³ und/oder einen Zugfestigkeitsindex L nach ISO 1924-3 zwischen 100 und 125 Nm/g und/oder einen Zugfestigkeitsindex quer nach ISO 1924-3 zwischen 50 und 65 Nm/g und/oder Zugfestigkeitsindexmittelwerte nach ISO 1924-3 zwischen 80 und 95 Nm/g und/oder einen Zugfestigkeitsindex quote nach ISO 1924-3 zwischen 1,7 und 2,3 Nm/g und/oder eine Bruchdehnung L nach ISO 1924-3 zwischen 1,2% und 2% und/oder eine Bruchdehnung quer nach ISO 1924-3 zwischen 2,2% und 3,4% und/oder einen spezifischen Berstwiderstand nach ISO 2758 zwischen 4 und 6 kN/g und/oder einen spezifischen Weiterreißwiderstand L nach ISO 1974 zwischen 6 und 10 mNm²/g und/oder einen spezifischen Weiterreißwiderstand quer nach ISO 1974 zwischen 7 und 11 mNm²/g und/oder eine Luftdurchlässigkeit (Gurley) nach ISO 5636-5 zwischen 40 und 50 s/100 ml und/oder eine Cobb-Zahl OS (Oberseite) nach ISO 535 zwischen 20 und 26 g/mL und/oder eine Cobb-Zahl SS (Siebseite) nach ISO 535 zwischen 21 und 27 g/mL und/oder eine Feuchte nach zwischen 6,3 und 8,3 Gew-% und/oder eine Rauheitzahl OS (Oberseite) nach ISO 8791-2 zwischen 600 und 1600 und/oder eine Rauheitzahl SS(Siebseite) nach ISO 8791-2 zwischen 50 und 350 auf, alle ISO in aktueller Fassung zum Anmeldedatum und/oder insbesondere bei einer relativen Luftfeuchte von 50% und/oder einer Temperatur von 23°C.

Insbesondere weist das Kraftpapier und/oder der Kraftkarton und/oder das Papier eine Tensile breaking strength MD (machine direction) nach PN-ENISO-1924-2 zwischen 3 und 10 kN/m und/oder eine Tensile breaking strength CD (cross direction) nach PN-ENISO-1924-2 zwischen 1 und 5 kN/m und/oder Tearing resistance MD (machine direction) nach PN-EN-21974 zwischen 150 und 1100mN und/oder Tearing resistance CD nach PN-EN-21974 zwischen 200 und 1200mN und/oder CD nach PN-ENISO-2758 zwischen 150 und 450kPa und/oder eine Water absorption Cobb66 nach PN-ISO-535 von maximal 35g/m², insbesondere zwischen 15 und 35 g/m² und/oder eine Feuchte nach PN-ISO-287 zwischen 4 und 10% auf, alle Normen in aktueller Fassung zum Anmeldedatum und/oder insbesondere bei einer relativen Luftfeuchte von 50% und/oder einer Temperatur von 23°C

Insbesondere ist das Kraftpapier und/oder der Kraftkarton und/oder das Papier und/oder die Beschichtung und/oder die Verpackung ungefärbt und/oder lebensmittelverträglich.

## Patentansprüche

1. Verpackung für ein Tiefkühlprodukt, wobei die Verpackung mindestens eine Lage Kraftpapier und/oder Kraftkarton aufweist, wobei die Verpackung weniger als 10 Gew% CTMP und weniger als 10 Gew% BCTMP beinhaltet und keine Imprägnierung beinhaltet und kompostierbar ist, **dadurch gekennzeichnet, dass** die Verpackung zumindest abschnittsweise mindestens eine mit der mindestens einen Lage Kraftpapier und/oder Kraftkarton, aufweisend ein Flächengewicht von 30 bis 360 g/m², insbesondere durch Laminieren, verbundene Lage verdichtetes Papier, aufweisend eine Dichte im Bereich von 900 bis 1300 kg/m³, und/oder Zellglas aufweist.

2. Verpackung nach Anspruch 1, wobei die Verpackung die mindestens eine Lage verdichtetes Papier und/oder Zellglas, insbesondere im Innenraum der Verpackung frei liegend, aufweist und/oder wobei die Verpackung, insbesondere zwischen der mindestens einen Lage aus Kraftpapier und/oder Kraftkarton und der mindestens einen Lage verdichtetes Papier und/oder Zellglas mindestens eine Feuchtigkeit, insbesondere Wasserdampf, absorbierende und/oder abweisende Lage und/oder mindestens eine Feuchtigkeit und/oder Öl abweisende Lage aufweist.

3. Verpackung nach Anspruch 1, wobei die Verpackung aus insbesondere ungebleichtem, Kraftpapier und/oder Kraftkarton und/oder Papier, insbesondere Frischfaserpapier, gebildet ist und/oder wobei die Verpackung zu mindestens 50 Gew% und/oder in der Hauptkomponente aus, insbesondere ungebleichtem, Kraftpapier und/oder Kraftkarton und/oder Papier, insbesondere Frischfaserpapier, gebildet ist und/oder wobei die Verpackung weniger als 5 Gew%, insbesondere kein, CTMP und weniger als 5 Gew%, insbesondere kein, BCTMP beinhaltet.

4. Verpackung nach einem der vorstehenden Ansprüche, wobei das Kraftpapier und/oder der Kraftkarton ohne Beschichtung und/oder ohne innenseitige und/oder produktseitige Beschichtung ausgebildet ist oder auf mindestens einer, insbesondere genau einer, Seite mit einer Beschichtung und/oder Auskleidung aus verdichtetem Papier, insbesondere mit einer Dichte von über 900 kg/m³, insbesondere über 1000 kg/m³, und/oder bis insbesondere 1300 kg/m³, aus Polyvinylalkohol und/oder aus Vinylalkohol-Copolymer beschichtet ist, wobei insbesondere der Anteil an Acrylaten, Polyvinylalkohol und Vinylalkohol-Copolymer 15 Gew %, insbesondere 10 Gew %, nicht überschreitet.

5. Verpackung nach einem der vorstehenden Ansprüche, wobei die Hauptkomponente mindestens 50 Gew %, insbesondere mindestens 85 Gew %, insbesondere mindestens 90 Gew %, insbesondere mindestens 95 Gew%, der Verpackung ausmacht und/oder eine Hauptkomponente nach 94/62/EG und/oder 97/129/EG ist.

6. Verpackung nach einem der vorstehenden Ansprüche, wobei das Kraftpapier und/oder der Kraftkarton keine Mikrostrukturierung aufweist und/oder nicht mikrostrukturiert wurde und/oder nicht bi-elastisch, insbesondere nicht elastisch ist, insbesondere nicht mehr als 4% in Längs- und/oder Querrichtung elastisch ist und/oder ein Flächengewicht von 40 bis 70 g/m² bei, insbesondere flexiblen, Papieren und/oder 230 bis 300 g/m² bei, insbesondere festen, Kartons, und/oder eine Dichte von 650 bis 800 kg/m³ aufweist.

7. Verpackung nach einem der vorstehenden Ansprüche, wobei das Kraftpapier eine Klimabilanz, insbesondere nach ecoinvent RER, von höchstens 1 CO2e/kg ungebleichtem Kraftpapier, insbesondere von höchstens 0,85 kg CO2e/kg ungebleichtem Kraftpapier, und/oder der Kraftkarton eine Klimabilanz, insbesondere nach ecoinvent RER, von höchstens 1,05 kg CO2e/kg ungebleichtem Kraftkarton, insbesondere von höchstens 0,95 kg CO2e/kg ungebleichtem Kraftkarton aufweist.

8. Verpackung nach einem der vorstehenden Ansprüche, wobei das Kraftpapier und/oder Kraftkarton besondere Eignung als Verpackung für Tiefkühlkost aufweist, indem bei einer 3-stündigen Befeuchtung von 80% relativer Feuchtigkeit bei 23°C eine Zunahme der Kegel-Durchstoßfestigkeit, gemessen in Newton, um 20% bei einem Papier von 50 g/m² und um 35% bei einem Papier von 75 g/m² gegenüber Standardbedingungen 50% relativer Feuchtigkeit und 23°C und/oder wobei das Kraftpapier und/oder der Kraftkarton ausgehend von einer dreistündigen Lagerung bei 50% relativer Feuchtigkeit bei 23°C nach einer dreistündigen Lagerung bei 80% relativer Feuchtigkeit bei 23°C eine Zunahme der Kegel-Durchstoßfestigkeit von mindesten 15%, insbesondere bei einer Grammatur von mehr als 70g/m² von mindestens 30%, zeigt.

9. Verpackung nach einem der vorstehenden Ansprüche, wobei die Verpackungen mindestens eine Verbindung mindestens zweier Abschnitte und/oder Stücke von Kraftpapier und/oder Kraftkarton aufweist, wobei die Verbindung mittels auf Abschnitten und/oder Stücken befindlichen Beschichtungen, insbesondere durch deren Verschmelzung, bewirkt ist, wobei insbesondere die Beschichtung auf der zum Inneren der Verpackung orientierten Seite des Kraftpapiers und/oder Kraftkartons aufgebracht ist.

10. Verpackung nach einem der vorstehenden Ansprüche, wobei ein in der Verpackung befindliches Volumen, insbesondere befindliches Material, insbesondere aufweisend mindestens einen öligen Bestandteil, vollständig durch Kraftpapier und/oder Kraftkarton mit Beschichtung umschlossen ist, wobei insbesondere alle zum Volumen orientierten Seiten und/oder Flächen des Kraftpapiers und/oder Kraftkartons mit der Beschichtung versehen sind, insbesondere vollständig und/oder flächig.

11. Verpackung nach einem der vorstehenden Ansprüche, wobei das Kraftpapier und/oder der Kraftkarton, das Kraftpapier und/oder der Kraftkarton mit Beschichtung und/oder die Verpackung kompostierbar und/oder biologisch abbaubar ist, insbesondere nach EN 13432 und/oder EN 14995 und/oder OECD 301 und/oder OECD 302, insbesondere innerhalb von 12 Wochen in einer Industriekompostierung nach Europäischer Norm EN 13432 zu mindestens 90 %.

12. Verpackung nach einem der vorstehenden Ansprüche, wobei die Verpackung überwiegend und/oder ausschließlich aus beschichtetem Kraftpapier und/oder Kraftkarton und Frischfaserpapier, insbesondere in brauner Farbe besteht und/oder wobei die Verpackung überwiegend und/oder ausschließlich aus ungebleichtem Kraftpapier und/oder Kraftkarton und/oder Kraftpapier und/oder Kraftkarton in brauner Farbe besteht.

13. Verpackung nach einem der vorstehenden Ansprüche, wobei die Verpackung mindestens eine, insbesondere mindestens zwei und/oder drei, linienförmige Verbindung(en) zweier Stücke und/oder Abschnitte von beschichtetem Kraftpapier und/oder Kraftkarton aufweist, wobei die Beschichtung eine Polyvinylalkohol- und/oder Vinylalkohol-Copolymer-Beschichtung und/oder eine Beschichtung aus verdichtetem Papier ist und die Verbindung durch Aufeinanderlegen von Beschichtungen zweier Stücke und/oder Abschnitte von beschichtetem Kraftpapier und/oder Kraftkarton und Verschmelzen der Beschichtungen und/oder auf der Beschichtung und/oder dem Kraftpapier und/oder Kraftkarton aufgetragenem Siegellack und/oder durch eine Verschmelzung aneinander angrenzender Beschichtungen und/oder auf der Beschichtung und/oder dem Kraftpapier und/oder Kraftkarton aufgetragenem Siegellack zweier Stücke und/oder Abschnitte von beschichtetem Kraftpapier und/oder Kraftkarton gebildet ist.

14. Verpacktes Tiefkühlprodukt, wobei das Tiefkühlprodukt in einer Verpackung nach einem der vorstehenden Ansprüche verpackt ist.

15. Verpacktes Tiefkühlprodukt nach Anspruch 14, wobei die Verpackung und das verpackte Tiefkühlprodukt tiefgekühlt sind.

## Claims

1. A packaging for a deep-frozen product, the packaging having at least one layer of kraft paper and/or kraft cardboard, the packaging containing less than 10% by weight of CTMP and less than 10% by weight of BCTMP and containing no impregnation and being compostable, **characterized in that** the packaging has, at least in sections, at least one layer of compressed paper, having a density in the range from 900 to 1300 kg/m³, and/or cellophane, bonded to said at least one layer of kraft paper and/or kraft cardboard, having a basis weight of 30 to 360 g/m², in particular by lamination.

2. The packaging according to claim 1, wherein the packaging comprises said at least one layer of compressed paper and/or cellophane, in particular exposed in the interior of the packaging, and/or wherein the packaging comprises, in particular between said at least one layer of kraft paper and/or kraft board and said at least one layer of compressed paper and/or cellophane, at least one moisture-absorbing and/or moisture-repellent layer, in particular water vapour, and/or at least one moisture- and/or oil-repellent layer.

3. The packaging according to claim 1, wherein the packaging is formed from, in particular, unbleached kraft paper and/or kraft board and/or paper, in particular virgin fibre paper, and/or wherein at least 50% by weight and/or in the main component of the packaging is formed from, in particular, unbleached kraft paper and/or kraft board and/or paper, in particular virgin fibre paper, and/or wherein the packaging contains less than 5% by weight, in particular no CTMP, and less than 5% by weight, in particular no BCTMP.

4. The packaging according to one of the preceding claims, wherein the kraft paper and/or the kraft board is formed without a coating and/or without a coating on the inside and/or on the product side or is coated on at least one, in particular exactly one, side with a coating and/or lining of compacted paper, in particular with a density of more than 900 kg/m³, in particular more than 1000 kg/m³, and/or up to in particular 1300 kg/m³, of polyvinyl alcohol and/or of vinyl alcohol copolymer, wherein in particular the proportion of acrylates, polyvinyl alcohol and vinyl alcohol copolymer does not exceed 15% by weight, in particular 10% by weight.

5. The packaging according to one of the preceding claims, wherein the main component constitutes at least 50% by weight, in particular at least 85% by weight, in particular at least 90% by weight, in particular at least 95% by weight, of the packaging and/or is a main component according to 94/62/EC and/or 97/129/EC.

6. The packaging according to one of the preceding claims, wherein the kraft paper and/or the kraft board has no microstructuring and/or has not been microstructured and/or is not bi-elastic, in particular is not elastic, in particular is not more than 4% elastic in the longitudinal and/or - transverse direction and/or has a weight per unit area of 40 to 70 g/m² in the case of, in particular, flexible papers and/or 230 to 300 g/m in the case ²of, in particular, rigid boards, and/or has a density of 650 to 800 kg/m³ .

7. The packaging according to one of the preceding claims, wherein the kraft paper has a carbon footprint, in particular according to ecoinvent RER, of at most 1 C02e/kg unbleached kraft paper, in particular of at most 0.85 kg C02e/kg unbleached kraft paper, and/or the kraft board has a carbon footprint, in particular according to ecoinvent RER, of at most 1.05 kg C02e/kg unbleached kraft board, in particular of at most 0.95 kg C02e/kg unbleached kraft board.

8. The packaging according to any one of the preceding claims, wherein the kraft paper and/or kraft board has particular suitability as packaging for frozen foods in that, at a 3-hour humidification of 80% relative humidity at 23°C, an increase in cone puncture strength, measured in Newtons, by 20% for a paper of 50 g/m² and by 35% for a paper of 75 g/m² compared with standard conditions of 50% relative humidity and 23°C and/or wherein the kraft paper and/or the kraft board, starting from storage for three hours at 50% relative humidity at 23°C, shows an increase in the cone puncture strength of at least 15% after storage for three hours at 80% relative humidity at 23°C, in particular of at least 30% for a grammage of more than 70² g/m.

9. The packaging according to one of the preceding claims, wherein the packaging comprises at least one connection of at least two portions and/or pieces of kraft paper and/or kraft cardboard, the connection being effected by means of coatings located on sections and/or pieces, in particular by fusion thereof, wherein in particular the coating is applied to the side of the kraft paper and/or kraft cardboard oriented towards the interior of the packaging.

10. The packaging according to one of the preceding claims, wherein a volume located in the packaging, in particular material located therein, in particular comprising at least one oily constituent, is completely enclosed by kraft paper and/or kraft cardboard with a coating, wherein in particular all sides and/or surfaces of the kraft paper and/or kraft cardboard oriented towards the volume are provided with the coating, in particular completely and/or over an area.

11. The packaging according to one of the preceding claims, wherein the kraft paper and/or the kraft board, the kraft paper and/or the kraft board with coating and/or the packaging is compostable and/or biodegradable, in particular according to EN 13432 and/or EN 14995 and/or OECD 301 and/or OECD 302, in particular to at least 90% within 12 weeks in an industrial composting according to European standard EN 13432.

12. The packaging according to one of the preceding claims, wherein the packaging consists predominantly and/or exclusively of coated kraft paper and/or kraft board and virgin fibre paper, in particular in brown colour and/or wherein the packaging consists predominantly and/or exclusively of unbleached kraft paper and/or kraft board and/or kraft paper and/or kraft board in brown colour.

13. The packaging according to any one of the preceding claims, wherein the packaging comprises at least one, in particular at least two and/or three, linear connection(s) of two pieces and/or sections of coated kraft paper and/or kraft board, wherein the coating comprises a polyvinyl alcohol and/or vinyl alcohol copolymercoating and/or a coating of compressed paper and the joint is formed by superimposing coatings of two pieces and/or sections of coated kraft paper and/or kraft board and fusing the coatings and/or sealing lacquer applied to the coating and/or the kraft paper and/or kraft board and/or by fusing adjacent coatings and/or sealing lacquer applied to the coating and/or the kraft paper and/or kraft board of two pieces and/or sections of coated kraft paper and/or kraft board.

14. A packaged frozen product, wherein the frozen product is packaged in a package according to any one of the preceding claims.

15. The packaged frozen product of claim 14, wherein the package and the packaged frozen product are frozen.

## Revendications

1. Emballage pour un produit surgelé, l'emballage ayant au moins une couche de papier kraft et/ou de carton kraft, l'emballage contenant moins de 10% en poids de CTMP et moins de 10% en poids de BCTMP et ne contenant pas d'imprégnation et étant compostable, **caractérisé en ce que** l'emballage a, au moins dans des sections, au moins une couche de papier comprimé, ayant une densité dans la gamme de 900 à 1300 kg/m³, et/ou de cellophane, liée à ladite au moins une couche de papier kraft et/ou de carton kraft, ayant un poids de base de 30 à 360 g/m², en particulier par stratification.

2. Emballage selon la revendication 1, dans lequel l'emballage comprend ladite au moins une couche de papier comprimé et/ou de cellophane, en particulier exposée à l'intérieur de l'emballage, et/ou dans lequel l'emballage comprend, en particulier entre ladite au moins une couche de papier kraft et/ou de carton kraft et ladite au moins une couche de papier comprimé et/ou de cellophane, au moins une couche absorbant l'humidité et/ou repoussant l'humidité, en particulier la vapeur d'eau, et/ou au moins une couche repoussant l'humidité et/ou l'huile.

3. Emballage selon la revendication 1, dans lequel l'emballage est formé, en particulier, de papier kraft écru et/ou de carton et/ou de papier kraft, en particulier de papier de fibres vierges, et/ou dans lequel au moins 50% en poids et/ou dans le composant principal de l'emballage est formé, en particulier, de papier kraft écru et/ou de carton et/ou de papier kraft, en particulier de papier de fibres vierges, et/ou dans lequel l'emballage contient moins de 5% en poids, en particulier pas de CTMP, et moins de 5% en poids, en particulier pas de BCTMP.

4. Emballage selon l'une des revendications précédentes, dans lequel le papier kraft et/ou le carton kraft est formé sans revêtement et/ou sans revêtement sur la face intérieure et/ou sur la face du produit ou est revêtu sur au moins une, en particulier exactement une, face d'un revêtement et/ou d'une doublure en papier compacté, en particulier avec une densité de plus de 900 kg/m³, en particulier de plus de 1000 kg/m³, et/ou jusqu'à en particulier 1300 kg/m³, d'alcool polyvinylique et/ou de copolymère d'alcool vinylique, où en particulier la proportion d'acrylates, d'alcool polyvinylique et de copolymère d'alcool vinylique ne dépasse pas 15% en poids, en particulier 10% en poids.

5. Emballage selon l'une des revendications précédentes, dans lequel le composant principal constitue au moins 50% en poids, en particulier au moins 85% en poids, en particulier au moins 90% en poids, en particulier au moins 95% en poids, de l'emballage et/ou est un composant principal selon 94/62/CE et/ou 97/129/CE.

6. Emballage selon l'une des revendications précédentes, dans lequel le papier kraft et/ou le carton kraft ne présente pas de microstructuration et/ou n'a pas été microstructuré et/ou n'est pas bi-élastique, en particulier n'est pas élastique, en particulier n'est pas élastique à plus de 4% dans le sens longitudinal et/ou transversal et/ou présente un poids surfacique de 40 à 70 g/m² dans le cas notamment de papiers souples et/ou de 230 à 300 g/m dans le cas² notamment de cartons rigides, et/ou présente une densité de 650 à 800 kg/m³.

7. Emballage selon l'une des revendications précédentes, dans lequel le papier kraft présente une empreinte carbone, notamment selon l'écoinvent RER, d'au plus 1 C02e/kg de papier kraft écru, notamment d'au plus 0,85 kg C02e/kg de papier kraft écru, et/ou le carton kraft présente une empreinte carbone, notamment selon l'écoinvent RER, d'au plus 1,05 kg C02e/kg de carton kraft écru, notamment d'au plus 0,95 kg C02e/kg de carton kraft écru.

8. Emballage selon l'une quelconque des revendications précédentes, dans lequel le papier kraft et/ou le carton kraft présente une aptitude particulière en tant qu'emballage pour aliments surgelés en ce que, à une humidification de 3 heures de 80% d'humidité relative à 23°C, une augmentation de la résistance à la perforation du cône, mesurée en Newtons, de 20% pour un papier de 50 g/m² et de 35% pour un papier de 75 g/mpar² rapport aux conditions standard de 50% d'humidité relative et 23°C et/ou dans lequel le papier kraft et/ou le carton kraft, à partir d'un stockage pendant trois heures à 50% d'humidité relative à 23°C, présente une augmentation de la résistance à la perforation du cône d'au moins 15% après un stockage pendant trois heures à 80% d'humidité relative à 23°C, en particulier d'au moins 30% pour un grammage supérieur à 70² g/m.

9. Emballage selon l'une des revendications précédentes, dans lequel l'emballage comprend au moins une liaison d'au moins deux portions et/ou pièces de papier kraft et/ou de carton kraft, la liaison étant réalisée au moyen d'enduits situés sur les sections et/ou pièces, notamment par fusion de celles-ci, dans lequel en particulier l'enduit est appliqué sur la face du papier kraft et/ou du carton kraft orientée vers l'intérieur de l'emballage.

10. Emballage selon l'une des revendications précédentes, dans lequel un volume situé dans l'emballage, notamment le matériau qui s'y trouve, notamment comprenant au moins un constituant huileux, est entièrement entouré de papier kraft et/ou de carton kraft avec un revêtement, dans lequel notamment tous les côtés et/ou surfaces du papier kraft et/ou du carton kraft orientés vers le volume sont pourvus du revêtement, notamment entièrement et/ou sur une zone.

11. Emballage selon l'une des revendications précédentes, dans lequel le papier kraft et/ou le carton kraft, le papier kraft et/ou le carton kraft avec revêtement et/ou l'emballage est compostable et/ou biodégradable, notamment selon la norme EN 13432 et/ou EN 14995 et/ou OCDE 301 et/ou OCDE 302, notamment à au moins 90% en 12 semaines dans un compostage industriel selon la norme européenne EN 13432.

12. Emballage selon l'une des revendications précédentes, dans lequel l'emballage est constitué de manière prédominante et/ou exclusive de papier et/ou de carton kraft couché et de papier de fibres vierges, en particulier de couleur brune et/ou dans lequel l'emballage est constitué de manière prédominante et/ou exclusive de papier et/ou de carton kraft non blanchi et/ou de papier et/ou de carton kraft de couleur brune.

13. Emballage selon l'une quelconque des revendications précédentes, dans lequel l'emballage comprend au moins une, en particulier au moins deux et/ou trois, liaison(s) linéaire(s) de deux morceaux et/ou sections de papier kraft et/ou de carton kraft couché, dans lequel le revêtement comprend un revêtement d'alcool polyvinylique et/ou de copolymère d'alcool vinylique et/ou un revêtement de papier comprimé et le joint est formé par la superposition des revêtements de deux morceaux et/ou sections de papier kraft et/ou de carton kraft revêtus et la fusion des revêtements et/ou de la laque de scellement appliquée sur le revêtement et/ou le papier kraft et/ou le carton kraft et/ou par la fusion des revêtements adjacents et/ou de la laque de scellement appliquée sur le revêtement et/ou le papier kraft et/ou le carton kraft de deux morceaux et/ou sections de papier kraft et/ou de carton kraft revêtus.

14. Produit congelé emballé, dans lequel le produit congelé est emballé dans un emballage selon l'une quelconque des revendications précédentes.

15. Produit congelé emballé selon la revendication 14, dans lequel l'emballage et le produit congelé emballé sont congelés.
